# EUROPÄISCHE PATENTSCHRIFT

(11) **EP 2 806 138 B1**
(45) Veröffentlichungstag und Bekanntmachung des Hinweises auf die Patenterteilung: **02.09.2015**
(21) Anmeldenummer: 13002657.8
(22) Anmeldetag: 22.05.2013
(51) Int. Cl.: F02C 3/04, B01J 7/00, F02C 6/06

(54) **Gaserzeugungssystem**
Gas generating system
Système de génération de gaz

(43) Veröffentlichungstag der Anmeldung: 26.11.2014
(73) Patentinhaber: Astrium GmbH, 82024 Taufkirchen (DE)
(72) Erfinder: Schwarting, Walter, D-26127 Oldenburg (DE)
(74) Vertreter: Marschall, Stefan

(56) Entgegenhaltungen:
- EP-A2- 0 884 099
- DE-A1- 3 320 197
- DE-A1- 3 900 572
- DE-A1- 19 958 310

## Beschreibung

Die Erfindung betrifft ein Gaserzeugungssystem zur Erzeugung von Auftriebsgasen auf der Basis der Zersetzung gasförmiger, flüssiger und/oder fester Treibstoffe bzw. Brennstoffe mit einem Gasgenerator.

Zur Bereitstellung von sehr großen Mengen an Auftriebsgas ist der Einsatz von derartigen Gasgeneratoren, die sowohl auf Basis gasförmiger, flüssiger als auch fester Treibstoffe bzw. Brennstoffe oder aber von Mischungen beider arbeiten, bereits bekannt. Unter dem Begriff "Gasgeneratoren" werden dabei alle gasbildenden chemischen Prozesse verstanden, bei denen aus einem oder mehreren Ausgangsstoffen ein Produktgas erzeugt wird. Die beteiligten Ausgangsstoffe können entweder gasförmig, flüssig oder fest sein, wobei für Mehrstoffsysteme in jedem Fall eine Brennkammer als Reaktor erforderlich ist, in der die beteiligten Stoffe in geeigneter Weise miteinander vermischt, gezündet und abgebrannt werden. Die chemische Reaktion der beteiligten Stoffe kann dabei beispielsweise mittels eines elektrischen Zünders initiiert werden oder aber auch hypergol erfolgen, also durch eine Selbstentzündung, die im Moment der stofflichen Vermischung durch einen chemischen Kontakt einsetzt. Darüber hinaus kann bei stabilen Mischungen von Brennstoffen mit Oxidatoren eine Selbstentzündung durch eine katalytische Aktivierung initiiert werden. Um solche Reaktionen mit höher Spontaneität, d.h. unverzögert, erfolgen zu lasen, ist immer die Temperatur des Katalysators von Bedeutung.

Auch Brennkammern für Einstoff-Systeme, in denen ein einziger, energiereicher Stoff zur chemischen Zersetzung angeregt wird, sind mit einem temperierten Katalysatorbett im Reaktor ausgestattet. Bei allen chemischen Verbrennungs- oder Zersetzungsreaktionen sind exotherme Wärmetönungen mit der Freisetzung von Wärme in der Brennkammer und gegebenenfalls auf ein Katalysatorbett beteiligt, die dadurch eine fortlaufende Reaktion aufrechterhält.

Zu den Problemen, die bei dieser Art der Gaserzeugung auftreten können, gehört einerseits die große Verbrennungswärme, die ohne das Vorhandensein einer effektiven Kühlmöglichkeit zu vergleichsweise hohen Temperaturen des Reaktionsgases, das in diesem Fall als Auftriebsgas dient, führen kann. Andererseits entsteht ein weiterer Nachteil dadurch, daß die AbgasZusammensetzung einen relativ hohen Anteil an Kohlendioxid, CO₂ und darüber hinaus auch toxische Konzentrationen an Kohlenmonoxid, CO, Stickoxiden, NOₓ, sowie unter Umständen auch toxisch wirkende Spuren unverbrannter Reste der Treibstoff-Komponenten enthalten kann.

Es sind Gaserzeugungsanlagen bekannt, wobei durch chemische Reaktion und/oder katalytische Zersetzung eines flüssigen Energieträgers ein Gas erzeugt wird und gegen den äußeren Umgebungsdruck ausgeblasen wird. Dieses ist aus der DE 33 20 197 A1 bekannt geworden. Weiterhin ist nach der DE 39 00 572 A1 eine Gaserzeugungseinheit auf der Basis der katalytischen Zersetzung flüssigen Hydrazins bekannt geworden. Dabei ist eine schnelle Erzeugung von Gasen mit Reduzierung der Temperatur und der Toxizität des Reaktionsgases nicht gegeben.

Aufgabe der Erfindung ist es, ein Gaserzeugungssystem der eingangs genannten Art so auszubilden, daß es eine extrem schnelle Erzeugung von Auftriebsgas und darüber hinaus eine möglichst weitgehende Reduzierung der Temperatur und der Toxizität des entstehenden Reaktionsgases ermöglicht.

Die Lösung dieser Aufgabe erfolgt dadurch, daß bei einem derartigen Gaserzeugungssystem der Auslaß des Gasgenerators mit dem Einlaß einer Turbinenstufe eines Abgas-Turboladers verbunden ist, dem über eine auf einer gemeinsamen Welle angeordnete Verdichterstufe Frischluft zuführbar ist, und daß den Auslässen der Turbinenstufe und der Verdichterstufe ein der Auftriebserzeugung dienendes Gasgemisch entnehmbar ist, wobei im Abgasstrom des Gasgenerators nach dem Abgas-Turbolader eine Brennkammer vorgesehen ist sowie eine vor der Brennkammer angeordnete Venturi-Düse, über die dem Abgasstrom aus dem Auslaß der Verdichterstufe austretende Frischluft zumischbar ist.

Die Erfindung macht dabei von der Tatsache Gebrauch, daß beim Betrieb von Gasgeneratoren hohe Strömungsgeschwindigkeiten des erzeugten Generatorgases bei gleichzeitig hohen Gastemperaturen entstehen. Der Energieinhalt dieses Generatorgases wird nun erfindungsgemäß zum Antreiben der Gasturbine eines Abgas-Turboladers genutzt, die auf der gleichen Achse einen Luftlader oder Verdichter antreibt. Dabei kann von einem Gasmengen-Verhältnis von bis zu 1:3 ausgegangen werden, d.h., ein Volumenteil Generatorgas fördert bis zu drei Volumenteile Luft. Diese große Luftmenge wird gemäß der Erfindung auf mehrfache Weise genutzt:
- Ein Teil der von dem Luftlader geförderten Frischluft wird durch Zumischen zum heißen Generator-Abgas, d.h., durch das Angebot weiteren Sauerstoffs aus der Luft, zu dessen Nachverbrennung verwendet. Dadurch reduziert sich der Anteil unverbrannter Treibstoff-Komponenten und zugleich auch derjenige des Kohlenmonoxids. Die Luftmengen-Regelung kann dabei in vorteilhafter Weiterbildung der Erfindung mittels einer sogenannten Lambda-Sonde erfolgen.
- Um die Toxizität des Abgases zu vermindern, ist in einer bevorzugten Ausführungsform der Erfindung ferner im Anschluß an die Nachverbrennung eine katalytische Konvertierung der CO und NOₓ -Abgasanteile auf Platin-Trägerkatalysatoren, wie sie aus dem Automobilbau bereits als Katalysatoren zur Abgasentgiftung bekannt sind, vorgesehen. Es entstehen dabei aus CO und NOₓ die ungiftigen, aber aufgrund der Sauerstoffverdrängung dennoch "stickend" wirkenden Produkte Kohlendioxid (CO₂) und Stickstoff (N₂).
- Im Anschluß an die katalytische Konvertierung kann weiterhin dem heißen Abgas der restliche zur Verfügung stehende Luftanteil zugemischt werden, um auf diese Weise die GesamtLuftmenge zu maximieren und gleichzeitig die Gastemperatur zu senken. In weiterer Ausgestaltung der Erfindung ist schließlich eine zusätzliche Zumischung von Wasser mit der Restluft möglich, um die Abgas-Temperatur noch weiter zu senken, beispielsweise auf den Bereich um ca. 100 °C.

Die Erfindung besitzt dabei den Vorteil, daß bei einer Nachverbrennung mit Luft im Gegensatz zu den durch Gasgeneratoren erzeugten toxischen, teilweise unverbrannten Abgasen aufgrund der hinzukommenden Frischluftmengen eine weitgehende Entgiftung erzielt wird, indem unverbrannte Treibstoffmengen sowie Pyrolyse-Produkte mit Saustoffüberschuß nachoxidiert werden. Durch die in vorteilhafter Weiterbildung der Erfindung ferner vorgesehene anschließende Abgasentgiftung mittels einer katalytischen Konvertierung der toxischen Bestandteile an CO und NOₓ zu den ungiftigen Produktgasen CO₂ und N₂ wird das Abgas praktisch vollständig entgiftet. Durch die weiterhin in vorteilhafter Weiterbildung der Erfindung vorgesehene Verwendung der restlichen Luftmengen vom Turbolader wird zudem ein hoher Anteil an Frischluft zugeführt und auf diese Weise wird neben einer Temperaturabsenkung die stickende Eigenschaft des Auftriebsgases beseitigt.

Schließlich wird ein weiterer Vorteil durch die Absenkung hoher, weit über 1000 °C liegender Temperaturen des Generator-Abgases aufgrund der Zumischung von kalter Luft von der Laderstufe, der je nach dem geforderten finalen Temperaturniveau noch zusätzlich Wasser zugesetzt wird, erreicht. Es bildet sich zwar nach der Verdampfung dieses zugemischten Wassers ein Kondensat, das - sofern erforderlich - entweder abgetrennt werden kann oder das - alternativ - bei der Berechnung der Auftriebsgas-Erzeugung volumenmäßig nicht in Betracht zu ziehen ist. Entscheidend ist jedoch die Temperaturabsenkung, die auf diese Weise erzielt wird. Diese führt zu einer finalen, kontrollierbaren maximalen Temperatur von beispielsweise ca. 100 °C sowohl im Auftriebsgas wie auch im Kondensat, wodurch eine Verträglichkeit bzw. Kompatibilität mit vielen der beispielsweise für Auftriebskörper verwendeten Polymerwerkstoffe gewährleistet ist.

Nachfolgend soll die Erfindung anhand von in der Zeichnung dargestellten Ausführungsbeispielen näher erläutert werden. Es zeigen:
- Fig. 1: den prinzipiellen Aufbau eines Gaserzeugungssystems zur schnellen Bereitstellung großer Mengen an Auftriebsgas und
- Fig. 2 - 11: den prinzipiellen Aufbau verschiedener Ausführungsformen des Gaserzeugungssystems gemäß Fig. 1.

In den Figuren sind gleiche Bauteile mit den gleichen Bezugszeichen versehen.

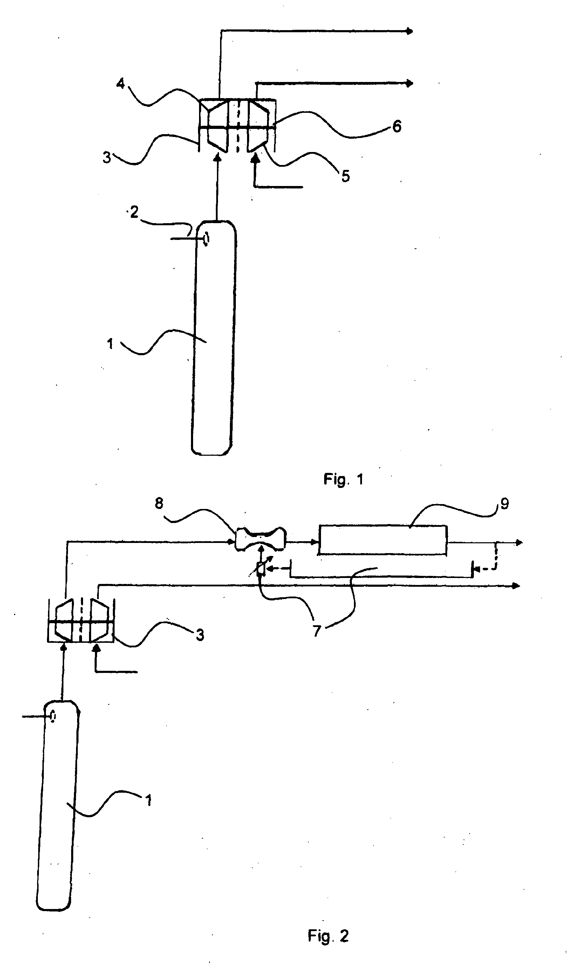

Die Darstellung in Fig. 1 zeigt einen Gasgenerator 1 mit einem im Fall des hier dargestellten Ausführungsbeispiels optional vorgesehenen Zünder 2 sowie einem am Ausgang des Gasgenerators 1 angeordneten Abgas-Turbolader 3. Dieser Turbolader 3 besteht aus einer Turbine 4 und einem Luftlader oder Verdichter 5, die auf einer gemeinsamen Welle 6 angeordnet sind.

Der Gasgenerator 1 kann dabei sowohl als Einstoff- wie auch als Mehrstoffsystem ausgelegt sein und in einer Mono- oder einer Bi-propellant-Konfiguration mit Gasen, Feststoffen oder Flüssigkeiten bzw. mit einer Kombination davon betrieben werden. Der Abgasstrom des Gasgenerators 1 versetzt die Turbine 4 des Abgas-Turboladers 3 in Rotation, die über die Welle 6 den Verdichter 5 antreibt, der seinerseits Umgebungsluft ansaugt und verdichtet. Im Prinzip können nun sowohl die die Turbine 4 verlassenden Abgase des Gasgenerators 1 als auch die verdichtete Zuluft als Gas zur Auftriebserzeugung genutzt werden, wie dies in Fig. 1 angedeutet ist. Dabei sind Strömungsrichtungen der Gase sowie der Luft in dieser Figur jeweils durch Pfeile angedeutet.

Das im allgemeinen sehr heiße Abgas des Gasgenerators 1 mit Temperaturen von mehr als 1000 °C weist eine Zusammensetzung auf, die aufgrund der schnellen Reaktionsabläufe nicht in einem chemischen Gleichgewicht liegt, sondern die teilweise oxidiertes und unverbranntes Material sowie pyrolysiertes, d.h., thermisch zersetztes Material enthalten kann. Außerdem kann das Abgas hochtoxische Verbrennungsprodukte wie CO und NOₓ enthalten. Deshalb wird bei der in Fig. 2 dargestellten Anordnung ein Teil der von dem Verdichter 5 geförderten Frischluft durch Zumischen zum heißen Generator-Abgas gleichsam durch das Angebot weiteren Sauerstoffs aus der Luft zu dessen Nachverbrennung verwendet. Dadurch reduziert sich der Anteil unverbrannter Treibstoff-Komponenten sowie auch des Kohlenmonoxids im Gasstrom. Die Luftmengen-Regelung erfolgt bei dem in Fig. 2 dargestellten Ausführungsbeispiel über eine Lambda-Sonde 7, die den Restsauerstoffgehalt im Verbrennungsabgas des Gasgenerators 1 nach dem Verlassen einer für die Nachverbrennung zusätzlich vorgesehenen Brennkammer 9 mißt und die diesem Generatorabgas über eine Venturi-Düse 8 daraufhin die zur sauerstoffreichen Nachverbrennung optimale Menge an Zuluft zuführt. Auch in diesem Fall werden, wie aus Fig. 2 ersichtlich, das nachverbrannte Abgas des Gasgenerators 1 und die verdichtete Zuluft gemeinsam zur Auftriebserzeugung genutzt.

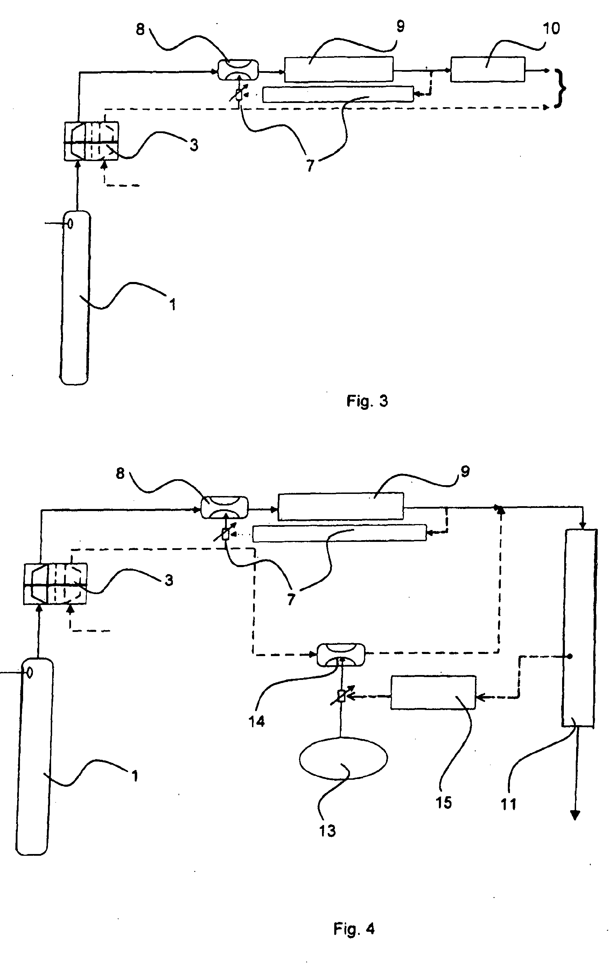

Bei der in Fig. 3 gezeigten Anordnung werden in dem aus der Brennkammer 9 austretenden Generatorabgas etwaig noch enthaltene toxische Beiprodukte durch eine nachfolgende katalytische Abgasentgiftung, eine sogenannte CO-NOₓ-Konvertierung, in einem Katalysator 10 zu nicht-toxischen Produkten umgelagert, bevor auch in diesem Fall das Abgas des Gasgenerators 1 und die verdichtete Zuluft gemeinsam zur Auftriebserzeugung genutzt werden.

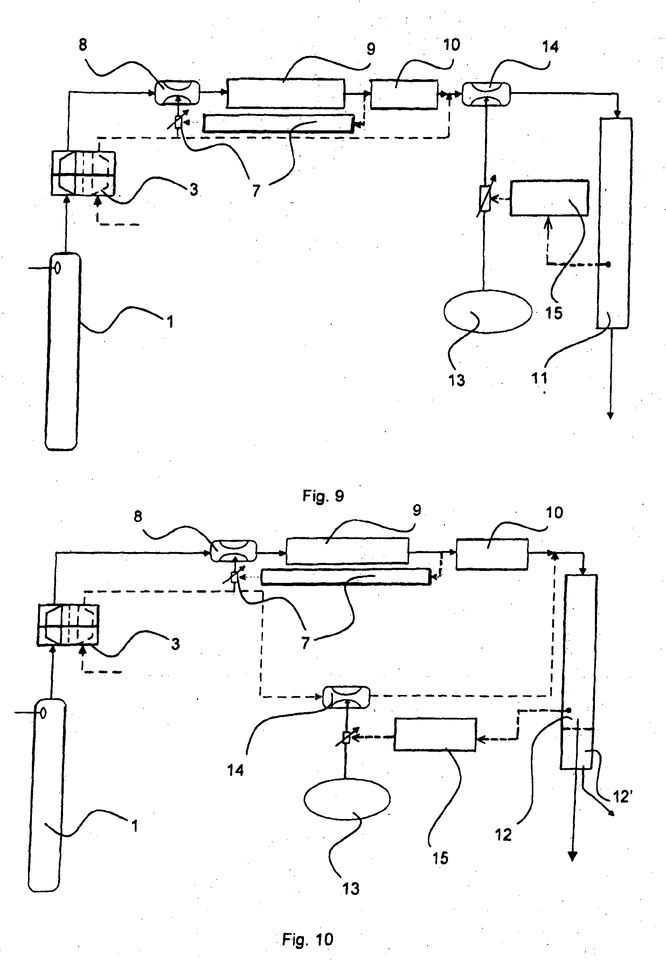

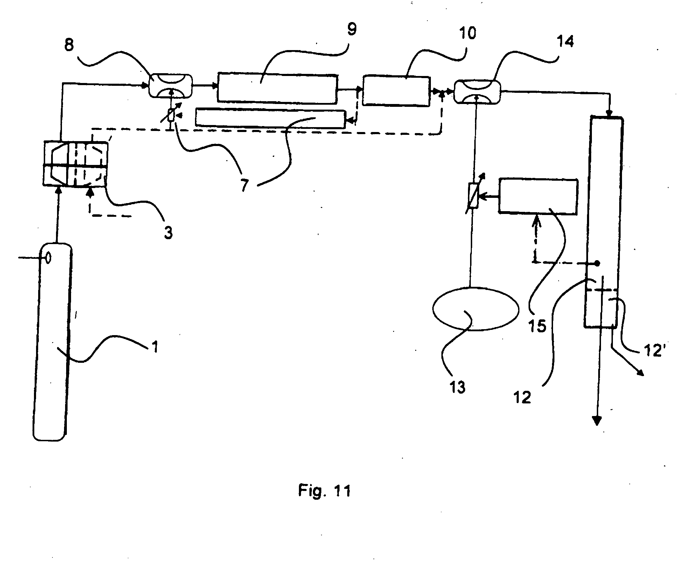

Bei den in den Figuren 4 bis 11 dargestellten Anordnungen wird das immer noch sehr heiße Abgas des Gasgenerators 1 zwecks Kühlung mit der nach dem Passieren der Lambda-Sonde 7 noch verbleibenden restlichen Menge der von der Verdichterstufe 5 geförderten Luft vermischt und nachfolgend durch eine Kühlstufe 11 bzw. 12 geleitet, bevor dieses Gasgemisch zur Auftriebserzeugung genutzt wird. Die Kühlstufen 11 und 12 unterscheiden sich dabei dahingehend, daß die Kühlstufe 12 zusätzlich mit einem Kondenswasserabscheider 12' ausgestattet ist, aus dem, wie nachfolgend noch näher erläutert wird, ein Kondensat abgeleitet wird.

Um die Temperatur des produzierten Gases noch weiter zu erniedrigen, beispielsweise auf einen Wert um ca. 100 °C, erfolgt zusätzlich zur Zufuhr der restlichen Menge an Laderluft über eine mit einem Wasserreservoir 13 verbundene zweite Venturi-Düse 14 eine Wasserinjektion. Auf diese Weise kann durch die zugeführte Wassermenge die Temperatur des Abgases und gegebenenfalls diejenige des Kondensats kontrolliert eingestellt bzw. geregelt werden. Ein Temperaturregler 15 erfaßt dabei die Temperatur des produzierten Auftriebsgases und regelt gegen einen Sollwert die zur Kühlung erforderliche Wassermenge, die aus dem Wasserreservoir 13 injiziert wird.

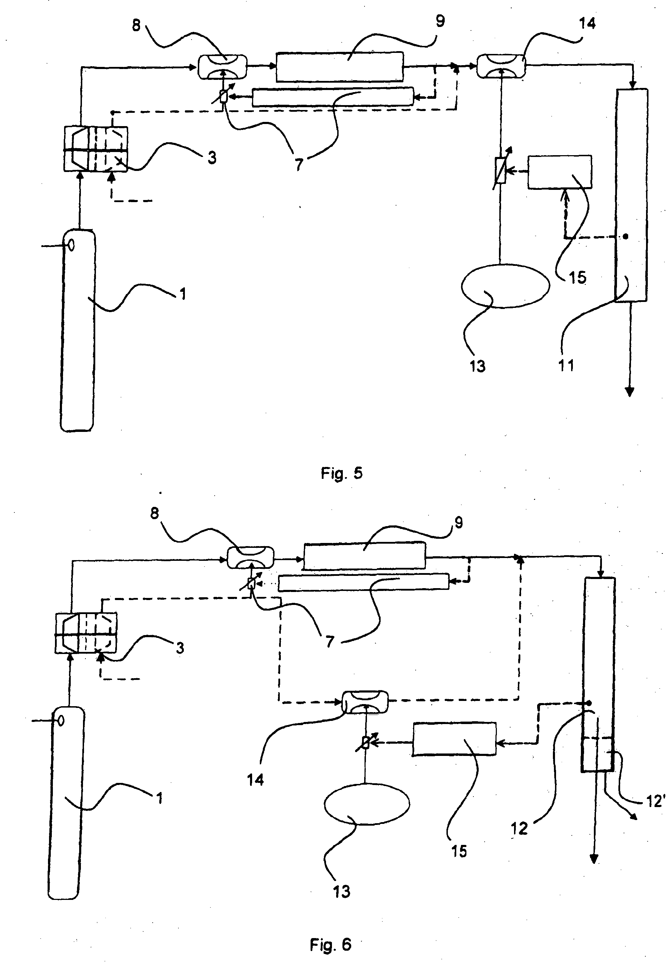

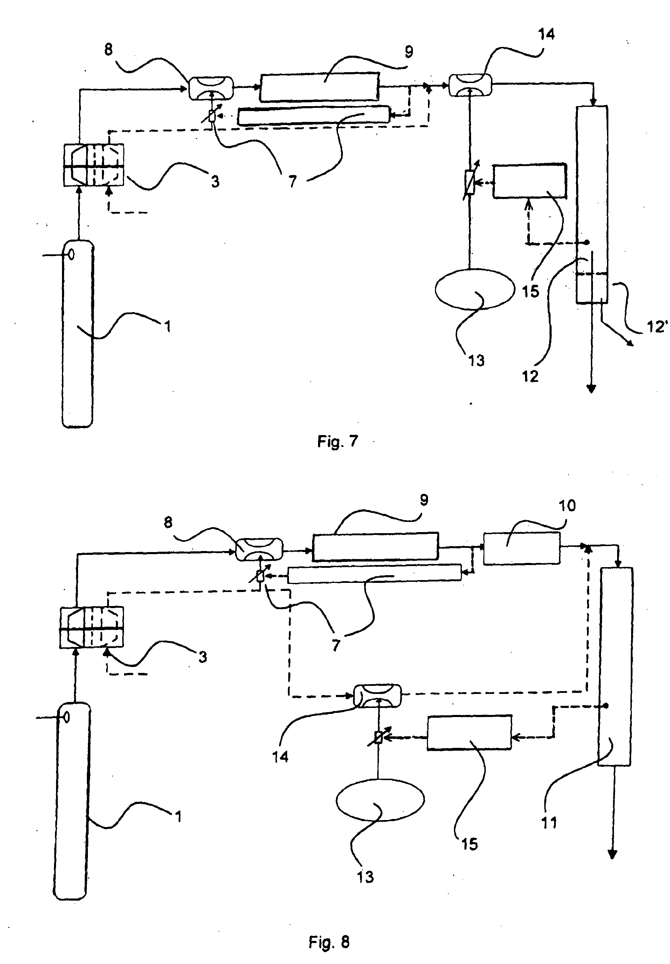

Bei den Anordnung gemäß Fig. 4 wird die verbleibende restliche Menge der geförderten Luft zunächst durch die Injektion von Wasser abgekühlt, bevor sie mit dem aus der Brennkammer 9 austretenden Abgas des Gasgenerators 1 vermischt und nachfolgend durch die Kühlstufe 11 geleitet wird. Demgegenüber werden bei der in Fig. 5 dargestellten Anordnung die beiden Luftströme zunächst miteinander vermischt, bevor der so entstehende Gasstrom durch die Injektion von Wasser weiter abgekühlt und nachfolgend durch die Kühlstufe 11 geleitet wird. Die Anordnung gemäß Fig. 6 entspricht derjenigen gemäß Fig. 4 und diejenige gemäß Fig. 7 entspricht derjenigen gemäß Fig. 5 jeweils mit der Ausnahme, daß anstelle der Kühlstufe 11 eine mit einem Kondenswasserabscheider 12' ausgestattete Kühlstufe 12 vorgesehen ist.

Schließlich ist bei den Anordnungen gemäß der Figuren 8 bis 11 jeweils nach der Brennkammer 9 noch der Katalysator 10 im Strom des aus der Brennkammer 9 austretenden Abgases des Gasgenerators 1 vorgesehen, bevor analog zu den Figuren 4 bis 7 und auf die dort beschriebenen unterschiedlichen Weisen einen temperatursenkende Injektion von Kühlwasser aus dem Wasserreservoir 13 über die Venturi-Düse 14 erfolgt. Die Lambda-Sonde 7, bei der es sich vorzugsweise um eine vorgeheizte, planbare Breitband-Lambdasonde handelt und die zwischen dem Ausgang der Nachverbrennungsstufe und dem Eingang der Katalysatorstufe angeordnet ist, regelt dabei den Luftbedarf für die Nachverbrennung.

Zu den speziellen Anwendungsgebieten der vorangehend beschriebenen Anordnungen, die eine sehr schnelle Bereitstellung großer Mengen von Auftriebsgas ermöglichen, zählt beispielsweise der Bereich der Offshore-Windenergie-Systeme, bei dem das Verbringen, das Be- und Entladen von Transport-Pontons sowie die Auftriebs- und Lage-Stabilisierung dieser Pontons bei Laständerungen und bei Seegang große Herausforderungen darstellen. Hier gilt es unter anderem, einzelne Ballasttanks mithilfe des von einem derartigen Gasgenerator sehr schnell erzeugten Druckgases zu bedrücken bzw. darum, in diesen Ballasttanks befindliches Wasser rasch nach außenbords zu fördern. So muß bei der Entladung eines Pontons die leichter gewordene Seite durch Wasseraufnahme ballastiert werden; während beim Wiederbeladen des Pontos dieses Ballastwasser mittels Druckgas möglichst schnell wieder nach außenbords gefördert werden muß.

Bei der dynamischen Stabilisierung im Seegang resultiert die Forderung nach mehr Seegangs-Tauglichkeit aus der Forderung nach einem möglichst großen Zeitfenster für ein Arbeiten auch bei schlechteren Wetterbedingungen auf See. Der Vorgang der dynamischen Stabilisierung ist daher in diesem Fall auf die Frequenz der seegangs-initiierten Schiffsbewegung abzustimmen.

Schließlich können die vorangehend beschriebenen Anordnungen in idealer Weise auch für die Erzeugung großer Gasmengen als sogenannte Gasvorhänge im Wasser dienen, die zur Schalldämpfung zur Verminderung der akustischen Belastungen beim Rammen und Bohren von Gründungen eingesetzt werden. Damit können durch die auf diese Weise erzeugten Blasenvorhänge Störgeräusche von akustisch sensibel reagierender Meeresfauna ferngehalten werden.

## Patentansprüche

1. Gaserzeugungssystem zur Erzeugung von Auftriebsgäsen auf der Basis der Zersetzung gasförmiger, flüssiger und/oder fester Treibstoffe bzw. Brennstoffe mit einem Gasgenerator, **dadurch gekennzeichnet, daß** der Auslaß des Gasgenerators (1) mit dem Einlaß einer Turbinenstufe (4) eines Abgas-Turboladers (2) verbunden ist, dem über eine auf einer gemeinsamen Welle (6) angeordnete Verdichterstufe (5) Frischluft zuführbar ist, und daß den Auslässen der Turbinenstufe (4) und der Verdichterstufe (5) ein der Auftriebserzeugung dienendes Gasgemisch entnehmbar ist, wobei im Abgasstrom des Gasgenerators (1) nach dem Abgas-Turbolader (2) eine Brennkammer (9) vorgesehen ist sowie eine vor der Brennkammer (9) angeordnete Venturi-Düse (8), über die dem Abgasstrom aus dem Auslaß der Verdichterstufe (5) austretende Frischluft zumischbar ist.

2. Gaserzeugungssystem nach Anspruch 1, **dadurch gekennzeichnet, daß** der Venturi-Düse (8) eine mit dem Auslaß der Brennkammer (9) verbundene Lambda-Sonde (7) zugeordnet ist.

3. Gaserzeugungssystem nach Anspruch 1 oder 2, **dadurch gekennzeichnet, daß** dem Auslaß der Brennkammer (9) ein Katalysator (10) nachgeschaltet ist.

4. Gaserzeugungssystem nach einem der Ansprüche 1 bis 3, **dadurch gekennzeichnet, daß** ein Wasserreservoir (13) vorgesehen ist, aus dem dem Gasgemisch über eine zweite Venturi-Düse (14) nach dem Verlassen der Brennkammer (9) bzw. des Katalysators (10) Wasser injizierbar ist.

5. Gaserzeugungssystem nach Anspruch 4, **dadurch gekennzeichnet, daß** eine abschließende Kühlstufe (11, 12) vorgesehen ist.

## Claims

1. A gas generation system for the generation of buoyancy gases on the basis of the decomposition of gaseous, liquid and/or solid fuels and/or combustibles with a gas generator, **characterised in that**, the outlet of the gas generator (1) is connected with the inlet of a turbine stage (4) of an exhaust gas turbocharger (2), to which fresh air can be supplied via a compressor stage (5) arranged on a common shaft (6), and **in that** a gas mixture serving to generate the buoyancy can be extracted from the outlets of the turbine stage (4) and the compressor stage (5), wherein a combustion chamber (9) is provided in the exhaust flow of the gas generator (1) downstream of the exhaust gas turbocharger (2), together with a venturi nozzle (8) arranged upstream of the combustion chamber (9), via which fresh air exiting from the outlet of the compressor stage can be mixed with the exhaust flow.

2. The gas generation system in accordance with Claim 1, **characterised in that**, a lambda sensor (7) connected with the outlet of the combustion chamber (9) is assigned to the venturi nozzle.

3. The gas generation system in accordance with Claim 1 or 2, **characterised in that**, a catalyst (10) is mounted downstream of the outlet of the combustion chamber (9).

4. The gas generation system in accordance with one of the Claims 1 to 3, **characterised in that**, a water reservoir (13) is provided, from which water can be injected into the gas mixture via a second venturi nozzle (14) after the gas mixture has exited the combustion chamber (9) and/or the catalyst (10).

5. The gas generation system in accordance with Claim 4, **characterised in that**, a final cooling stage (11, 12) is provided.

## Revendications

1. Système de production de gaz pour produire des gaz de poussée en se basant sur la décomposition de carburants, respectivement, combustibles gazeux, liquides et/ou solides, comprenant un générateur de gaz, **caractérisé en ce que** la sortie du générateur de gaz (1) est reliée à l'admission d'un étage de turbine (4) d'un turbocompresseur de gaz d'échappement (2) auquel est amené de l'air neuf par un étage de compresseur (5) disposé sur un arbre commun (6), et qu'un mélange gazeux servant à produire la poussée peut être prélevé des sorties de l'étage de turbine (4) et de l'étage de compresseur (5), sachant qu'une chambre de combustion (9) est prévue dans le flux de gaz d'échappement du générateur de gaz (1) après le turbocompresseur de gaz d'échappement (2), ainsi qu'une buse venturi (8) disposée devant la chambre de combustion (9), par laquelle de l'air neuf sortant de la sortie de l'étage de compresseur (5) peut être mélangé au flux de gaz d'échappement.

2. Système de production de gaz selon la revendication 1, **caractérisé en ce qu'**une sonde lambda (7) reliée à la sortie de la chambre de combustion (9) est attribuée à la buse venturi (8).

3. Système de production de gaz selon la revendication 1 ou 2, **caractérisé en ce qu'**un catalyseur (10) est monté en aval de la sortie de la chambre de combustion (9).

4. Système de production de gaz selon l'une des revendications 1 à 3, **caractérisé en ce qu'**un réservoir d'eau (13) est prévu, duquel de l'eau peut être injectée au mélange gazeux par une seconde buse venturi (14) après sa sortie de la chambre de combustion (9), respectivement, du catalyseur (10).

5. Système de production de gaz selon la revendication 4, **caractérisé en ce qu'**un étage de refroidissement terminal (11, 12) est prévu.
